Europäisches Patentamt

European Patent Office

Office européen des brevets

(19)

(11) Veröffentlichungsnummer **0 056 965**
**B 1**

(12) # EUROPÄISCHE PATENTSCHRIFT

(45) Veröffentlichungstag der Patentschrift:
**19.06.85**

(21) Anmeldenummer: **82100305.0**

(22) Anmeldetag: **18.01.82**

(51) Int. Cl.⁴: **C 08 L 51/00,** C 08 L 51/04,
C 08 L 71/04

(54) Thermoplastische Formmasse enthaltend schlagfest modifizierte Styrolpolymerisate und Polyphenylenether.

(30) Priorität: **24.01.81 DE 3102254**

(43) Veröffentlichungstag der Anmeldung:
**04.08.82 Patentblatt 82/31**

(45) Bekanntmachung des Hinweises auf die Patenterteilung:
**19.06.85 Patentblatt 85/25**

(84) Benannte Vertragsstaaten:
**BE DE FR GB IT NL**

(56) Entgegenhaltungen:
**US - A - 4 128 602**

(73) Patentinhaber: **BASF Aktiengesellschaft,
Carl-Bosch-Strasse 38, D-6700 Ludwigshafen (DE)**

(72) Erfinder: **Brandstetter, Franz, Dr., Ritterbuechel 45,
D-6730 Neustadt (DE)**
Erfinder: **Mc Kee, Graham Edmund, Dr., Kastanienweg 8,
D-6940 Weinheim (DE)**
Erfinder: **Priebe, Edmund, Dr., Bensheimer Ring 7A,
D-6710 Frankenthal (DE)**

# 0 056 965

**Beschreibung**

Die Erfindung betrifft thermoplastische Formmassen auf der Grundlage von schlagfest modifizierten Styrolpolymerisaten und Polyphenylenethern.

Thermoplastische Massen, die sich zur Herstellung von Formteilen eignen und die schlagzäh modifizierte Styrolpolymerisate und Polyphenylenether enthalten, sind z. B. aus den US-Patentschriften 3 383 435, 4 128 602 sowie 4 128 603 bekannt. Als Weichkomponente wird hierbei meist Polybutadien verwendet. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß aus den Formmassen hergestellte Formteile leicht zur Verstaubung neigen.

Der vorliegenden Erfindung lag daher die Aufgabe zugrunde, thermoplastische Formmassen auf der Grundlage von schlagfest modifizierten Styrolpolymerisaten und Polyphenylenethern zu schaffen, die zu Formteilen mit einer verringerten Verstaubungstendenz führen.

Diese Aufgabe wird erfindungsgemäß gelöst durch thermoplastische Formmassen der genannten Art, bei denen die Weichkomponente des schlagfest modifizierten Styrolpolymerisats aus einem mit Styrol gepfropften Kautschuk besteht, der aus 30 bis 80 Gew.-% eines Acrylalkylesters mit 2 bis 8 Kohlenstoffatomen im Alkylrest, 20 bis 70 Gew.-% Butadien und gegebenenfalls 3 bis 10 Gew.-% Vinylalkyläther mit 1 bis 8 Kohlenstoffatomen im Alkylrest aufgebaut ist.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern die oben angegebene Zusammensetzung eingehalten wird.

Die thermoplastischen Formmassen können schlagfest modifizierte Styrolpolymerisate und Polyphenylenether in fast beliebigen Mengenverhältnissen, beispielsweise von 5 bis 90 Gew.-% Styrolpolymerisat und 95 bis 10 Gew.-% Polyphenylenether enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenether enthalten.

Als Hartkomponente kommen Homo- und Mischpolymerisate des Styrols und der kern- oder seitenkettenalkylierten Styrole in Betracht. Vorzugsweise wird Styrol allein verwendet.

Die Harkomponente kann nach den herkömmlichen Methoden erhalten werden. So kann die Polymerisation des Styrols in Masse, Lösung, Suspension oder wäßriger Emulsion durchgeführt werden.

Die Hartkomponente hat vorzugsweise eine Viskositätszahl von 40 bis 140, insbesondere von 80 bis 120 ml/g. Die Bestimmung der Viskositätszahl erfolgt anch DIN 53 726; dabei werden 0,5 g Material in 100 ml Toluol gelöst.

Das meist angewandte Verfahren zur Herstellung der schlagzäh modifizierten Styrolpolymerisate mit einer Weichkomponente auf Acrylat-Butadien-Basis ist die Polymerisation in Emulsion. Selbstverständlich sind auch andere Verfahren anwendbar.

Es wird zunächst das Copolymerisat hergestellt, auf das dann in einem zweiten Schritt Styrol zur Herstellung des Pfropfmischpolymerisats aufgepfropft wird.

Das Mischpolymerisat der Weichkomponente wird durch übliche Polymerisation in wäßriger Emulsion hergestellt. Die Comonomeren, die dieses Mischpolymerisat bilden, sind vorzugsweise Acrylsäurebutylester und/oder Acrylsäureäthylhexylester, die in Mengen von 30 bis 80 Gew.-% eingesetzt werden, Butadien, das 20 bis 70, vorzugsweise 30 bis 35 Gew.-% der Comonomeren ausmacht, und gegebenenfalls Vinylalkyläther mit 1 bis 8 Kohlenstoffatomen im Alkylrest, die in Mengen von 3 bis 10, vorzugsweise 5 bis 8 Gew.-% am Aufbau des Mischpolymerisats beteiligt sind. Es werden die üblichen Emulgatoren, wie Natriumsalze von Paraffinsulfonsäuren mit 12 bis 18 Kohlenstoffatomen, Arylsulfonate, Natriumsalze von Fettsäuren mit etwa 16 bis 18 Kohlenstoffatomen, Fettalkoholsulfate mit etwa 12 bis 18 Kohlenstoffatomen, und ähnliche Emulgatoren in Mengen von etwa 0,1 bis 3 Gew.-% verwendet, und als Polymerisationsinitiatoren werden im allgemeinen radikalbildende Verbindungen, wie Persulfate, Peroxyde oder Hydroperoxyde oder auch Azoverbindungen, verwendet.

Die Mitverwendung von Vinylalkyläthern, vorzugsweise von Vinylmethyläthern, bei der Herstellung des Mischpolymerisats ist von Vorteil. Der Vinylalkyläther, dessen Alkylrest 1 bis 8 Kohlenstoffatome enthalten kann, kann bereits vollständig am Anfang der Polymerisation zugesetzt werden. Es ist aber auch möglich, ihn absatzweise zuzusetzen. In welcher Weise die Vinylalkyläther einpolymerisieren bzw. wirken, konnte noch nicht geklärt werden. Es wurde aber festgestellt, daß der Zusatz dieses Monomeren in dem genannten Mengenbereich beim Polymerisieren ein Copolymerisat mit besseren Eigenschaften ergibt, als sie vergleichbare Copolymere ohne dieses Monomer haben.

Zur Herstellung des Pfropfmischpolymerisats wird dann in einem zweiten Schritt in Gegenwart des so erhaltenen Latex des butadienhaltigen Polymerisats Styrol polymerisiert. Es ist vorteilhaft, diese Pfropfmischpolymerisation von Styrol auf das als Pfropfgrundlage dienende butadienhaltige Polyme-

2

risat wieder in wäßriger Emulsion unter den üblichen, oben aufgeführten Bedingungen durchzuführen. Die Pfropfmischpolymerisation kann zweckmäßig im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Styrol kann dem Reaktionsgemisch auf einmal, absatzweise in mehreren Stufen oder vorzugsweise kontinuierlich während der Polymerisation zugegeben werden. Die Pfropfmischpolymerisation von Styrol in Gegenwart des Butadien-Acrylat-Polymerisats wird so geführt, daß von 25 bis 45 Gew.-%, vorzugsweise von 30 bis 40 Gew.-% an gepfropftem Styrol im Pfropfmischpolymerisat resultiert. Da die Pfropfausbeute bei der Pfropfmischpolymerisation nicht 100%ig ist, muß eine etwas größere Menge Styrol bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise u. a. durch die Dosiergeschwindigkeit der Monomeren oder durch Reglerzugabe erfolgen (Chauvel, Daniel, ACS Polymer Preprints 15 [1974], Seite 329 ff.). Bei der Emulsions-Pfropfmischpolymerisation entstehen im allgemeinen etwa 5 bis 15 Gew.-%, bezogen auf das Pfropfmischpolymerisat, an freiem, ungepfropftem Styrol-Polymerisat. Der Anteil des Pfropfmischpolymerisats in dem bei der Pfropfmischpolymerisation erhaltenen Polymerisationsprodukt wird nach der weiter unten angegebenen Methode ermittelt.

Die mittlere Teilchengröße und die Teilchengrößenverteilung wurde aus der integralen Massenverteilung nach der Methode von W. Scholtan und H. Lange, Kolloid-Z. und Z.-Polymere 250 (1972), Seiten 782 bis 796, mittels einer analytischen Ultrazentrifuge bestimmt. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein $\alpha$-ständiges tert. Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)-ether, Poly(2,6-dimethoxy-1,4-phenylen)ether, Poly(2,6-dimethyl-1,4-phenylen)ether, Poly(2,6-dibrom-1,4-phenylen)ether. Bevorzugt wird der Poly(2,6-dimethyl-1,4-phenylen)ether, besonders mit einer Grenzviskosität zwischen 0,45 und 0,64 dl/g (gemessen in Chloroform bei 30°C).

Die Polyphenylenether können z. B. in Gegenwart von komplexbildenden Mitteln wie Kupferbromid und Dibutylamin aus den Phenolen hergestellt werden.

Die Mischungen aus den schlagzäh modifizierten Styrolpolymerisaten und Polyphenylenethern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Durch Mischen der Weich- und Hartkomponente und der Polyphenylenether gelangt man zu den erfindungsgemäßen thermoplastischen Formmassen. Üblicherweise erfolgt dies auf Vorrichtungen, die ein homogenes Mischen zulassen, wie Knetern, Extrudern oder Walzenmischgeräten.

Es zeigte sich nun überraschend, daß Formteile aus den erfindungsgemäßen Formmassen neben der geringen Verstaubungstendenz eine hohe Wärmeformbeständigkeit und Zähigkeit besitzen.

Die in den Beispielen und Vergleichsversuchen genannten Teile sind Gewichtsteile.

## Beispiele und Vergleichsversuche

### Beispiele

### Pfropfmischpolymerisat

In einem Rührautoklaven, der 150 Teile destilliertes Wasser, einen Teil Na-$C_{14}$-Alkylsulfonat, 0,2 Teile Kaliumperoxodisulfat und 0,2 Teile Natriumpyrophosphat enthält, wurde der Inhalt auf 65°C erhitzt. Danach wurden 10 Teile Butadien, 10 Teile Butylacrylat und 3 Teile Vinylmethyläther zugegeben und für die Dauer von 1 Stunde gerührt. Im Anschluß daran wurde im Verlauf von 6 Stunden ein Gemisch aus 20 Teilen Butadien und 32 Teilen Butylacrylat kontinuierlich zugesetzt. Danach wurde für die Dauer von 2 Stunden weiter polymerisiert und anschließend der Rührautoklav entspannt. Die erhaltene Polymerdispersion, die einen Feststoffgehalt von 33% hatte, zeichnete sich durch eine enge Teilchengrößenverteilung aus, wobei ein mittlerer Teilchengrößendurchmesser von 0,08 µm vorlag.

Nach Zusatz von 0,1 Teilen Kaliumperoxidisulfat wurde diese Dispersion mit 25 Teilen Styrol im

3

Verlauf von 2 Stunden versetzt. Danach wurde weiterhin für die Dauer von einer Stunde polymerisiert. Der Umsatz, bezogen auf Styrol, lag über 99%. Die erhaltene Pfropfkautschukdispersion wurde mittels Calciumchloridlösung gefällt und das abgetrennte Pfropfmischpolymerisat mit destilliertem Wasser gewaschen.

Die in der Tabelle angegebenen Teile an Pfropfmischpolymerisat, Homopolystyrol mit einer Viskositätszahl 74 ml/g und Poly(2,6-dimethyl-1,4-phenylen)ether wurden mit jeweils 0,8 Teilen Trisnonylphenylphosphit und 1,5 Teilen Polyäthylen auf einem Zweiwellenextruder bei 280°C geschmolzen, homogenisiert, gemischt und granuliert. Der Poly(2,6-dimethyl-1,4-phenylen)ether hatte eine Grenzviskosität von 0,49 dl/g (gemessen in Chloroform bei 30°C).

## Vergleichsversuche

Ein übliches schlagfest modifiziertes Polystyrol wurde nach folgender Vorschrift erhalten:

In einer 2-Kessel-2-Turm-Kaskade wurde eine Mischung von 7,2 Teilen eines Polybutadiens mit einem cis-Anteil von 98% zusammen mit 85,7 Teilen Styrol, 6 Teilen Äthylbenzol und 0,1 Teilen Octadecyl-3-(3',5'-di-tert.-butyl-4'-hydroxyphenyl)-propionat thermisch polymerisiert. Der Durchsatz betrug 4 Liter pro Stunde. Die in den einzelnen Reaktoren angewendeten Rührgeschwindigkeiten, Temperaturen sowie die eingestellten integralen Umsätze sind unten aufgeführt. In den dritten Reaktor wurden dem Polymerstrom 0,02 Gew.-% tert.-Dodecylmercaptan, bezogen auf Styrol, kontinuierlich zudosiert. Die Polymerisatmischung wurde nach der Polymerisation in einer Entgasungszone bei 220 bis 240°C vom Lösungsmittel und Restmonomeren befreit.

| Ort | Rührgeschwindigkeit [UpM] | Temp. [°C] | Umsatz (Integral) |
| --- | --- | --- | --- |
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | — | 250 | — |

Die in der Tabelle angegebenen Gewichtsteile an schlagfest modifiziertem Polystyrol und von Poly(2,6-dimethyl-1,4-phenylen)ether wurden mit jeweils 0,8 Gew.-Teilen Tris(nonylphenyl)phosphit und 1,5 Gew.-Teilen Polyäthylen auf einem 2-Wellen-Extruder bei 280°C geschmolzen, homogenisiert, gemischt und granuliert. Der Poly(2,6-dimethyl-1,4-phenylen)ether hatte eine Grenzviskosität von 0,49 dl/g. Der Erweichungspunkt nach Vicat wurde nach DIN 53 460/B bestimmt.

Zur Ermittlung der Verstaubungstendenz wurden bei 200°C Preßplatten mit den Abmessungen 160 × 160 × 2 mm hergestellt. Je eine Platte wurde in eine Staubkammer eingebracht, in der durch Einblasen von Luft der Staub aufgewirbelt wurde, je eine Platte wurde in einem Raum mit einer relativen Luftfeuchtigkeit von 30 bis 50% aufbewahrt. Nach bestimmten Zeiten wurde überprüft, ob sich an den Plattenoberflächen Staubblumen bildeten.

Tabelle

| | schlagfest modifiziertes Polystyrol aus 45 Gew.-% Pfropfmischpolymerisat und 55 Gew.-% Homopolystyrol [Gew.-Teile] | Poly(2,6-dimethyl-1,4-phenylen)-ether [Gew.-Teile] | Erweichungs-punkt nach Vicat [°C] | Verstaubung, Bildung von Staubblumen | |
|---|---|---|---|---|---|
| | | | | nach 30 min Staubkammer | nach 30 Tagen Labor |
| Beispiele | | | | | |
| 1 | 75 | 25 | 108 | nein | nein |
| 2 | 65 | 35 | 125 | nein | nein |
| 3 | 55 | 45 | 134 | nein | nein |
| Vergleichs-versuche | übliches schlagfest modi-fiziertes Polystyrol auf Butadienbasis | | | | |
| A | 75 | 25 | 110 | ja | ja |
| B | 65 | 35 | 124 | ja | ja |
| C | 55 | 45 | 134 | ja | ja |

**Patentanspruch**

Thermoplastische Formmasse aus einer Mischung von

a) einem Styrolpolymerisat mit einer Viskositätszahl im Bereich von 40 bis 140 ml/g (bestimmt nach DIN 53 726) als Hartkomponente,

b) einem vernetzten und bis zu eimem Pfropfgrad von 10 bis 60 Gew.-% mit Styrol gepfropften Kautschuk mit einer Glasübergangstemperatur unter 0°C, der seinerseits aus 30 bis 80 Gew.-% eines Acrylsäurealkylesters mit 2 bis 8 C-Atomen im Alkylrest, 20 bis 70 Gew.-% Butadien und gegebenenfalls 3 bis 10 Gew.-% eines Vinylalkylethers mit 1 bis 8 C-Atomen im Alkylrest besteht, und

c) einem Polyphenylenether mit mindestens 50 Benzolresten in der Kette,

im Gewichtsverhältnis a : b wie (95 bis 40) : (5 bis 60) und (a + b) : c wie (5 bis 90) : (95 bis 10).

**Claim**

A thermoplastic molding material consisting of a mixture of

a) a styrene polymer having an intrinsic viscosity of from 40 to 140 ml/g (determined according to DIN 53,726), as the hard component,

b) a crosslinked rubber having a glass transition temperature below 0°C and grafted to the extent of 10 to 60% by weight with styrene, the rubber, in turn, comprising from 30 to 80% by weight of an alkyl acrylate, alkyl being of 2 to 8 carbon atoms, and from 20 to 70% by weight of butadiene, with or without from 3 to 10% by weight of a vinyl alkyl ether, alkyl being of 1 to 8 carbon atoms, and

c) a polyphenyleneether having at least 50 benzene units in the chain,

the weight ratio of a to b being (95—40) : (5—60) and the weight ratio of (a+b) to c being (5—90) : (95—10).

**Revendication**

Matière à mouler thermoplastique composée d'un mélange de

a) un polymère styrénique avec un indice de viscosité (déterminé d'après la norme DIN 53 726) dans la gamme de 40 à 140 ml/g comme composante rigide;

b) un caoutchouc réticulé et greffé de styrène jusqu'à un degré de greffage de 10 à 60% en poids, d'une température de transition vitreuse inférieure à 0°C et constitué de 30 à 80% en poids d'un acrylate d'alkyle avec un radical alkyle en $C_2$ à $C_8$, de 20 à 70% en poids de butadiène et éventuellement de 3 à 10% en poids d'un éther vinyl-alkylique avec un radical alkyle en $C_1$ à $C_8$,

c) un poly(éther de phénylène) avec au moins 50 groupes benzène dans la chaîne,

les rapports pondéraux a : b étant de (95 à 40) : (5 à 60) et (a + b) : c de (5 à 90) : (95 à 10).